# EUROPEAN PATENT SPECIFICATION

(11) **EP 2 525 319 B1**
(45) Date of publication and mention of the grant of the patent: **17.08.2016**
(21) Application number: 12168693.5
(22) Date of filing: 21.05.2012
(51) Int. Cl.: G06Q 30/02, H04N 21/80

(54) **USING A MEDIA CONTENT RECEIVER TO PROVIDE PROMOTIONAL INFORMATION TO A MOBILE DEVICE**
VERWENDUNG EINES MEDIENINHALTSEMPFÄNGERS ZUR BEREITSTELLUNG VON WERBEINFORMATIONEN FÜR EINE MOBILE VORRICHTUNG
UTILISATION D'UN RÉCEPTEUR DE CONTENU MULTIMÉDIA POUR FOURNIR DES INFORMATIONS PROMOTIONNELLES SUR UN DISPOSITIF MOBILE

(30) Priority: 20.05.2011 US 201113112423
(43) Date of publication of application: 21.11.2012
(73) Proprietor: EchoStar Technologies L.L.C., Englewood, CO 80112 (US)
(72) Inventor: Harper, Leslie Ann, Highlands Ranch, CO 80126 (US); Card II, John Anthony, Denver, CO 80202 (US)
(74) Representative: Sadler, Peter Frederick

(56) References cited:
- WO-A1-2006/031202
- WO-A1-2008/112808
- GB-A- 2 370 946
- GB-A- 2 391 683

## Description

### TECHNICAL FIELD

Embodiments of the subject matter described herein relate generally to content delivery systems such as satellite video systems. More particularly, embodiments of the subject matter relate to a media content receiver (such as a set-top box) that manages and facilitates delivery of electronic coupons and/or other promotional information to a mobile device.

### BACKGROUND

Most television viewers now receive their video signals through a content aggregator such as a cable or satellite television provider. In a typical scenario, encoded audio/video signals are sent via a cable or wireless data link to the viewer's home, where the signals are ultimately decoded in a set-top box or other consumer device. The decoded signals can then be viewed on a television or other appropriate display as desired by the viewer.

Nearly all commercial broadcast radio and television channels present programs, such as movies, entertainment series episodes, news programs, sporting events, and the like, separated by, and possibly interspersed with, short advertisements, commercial messages, or other interstitial segments of content. Typically, the scheduling of these interstitial segments is not known well in advance to the general public. Instead, only the programs are listed in a program listing, or electronic program guide (EPG), that a viewer may access, such as by way of a media content receiver, e.g., a set-top box.

Every so often, a viewer may be interested in the content or subject matter of a commercial being presented or displayed, such as the identity of a product or service, a mailing address of an associated company, a uniform resource locator (URL) of a website, a telephone number, or the like, by which a viewer may learn more about the product or service. In such situations, a commercial may be considered to be informative rather than a nuisance. Accordingly, the user may repeatedly view a commercial, record the program in which the commercial appears, and/or record the commercial separately from the program content.

UK patent application GB 2370946 describes a credit transfer system that motivates a user to pay attention to broadcast advertisements by allowing the user to earn credit tokens by pressing a function key when a visual or audio prompt occurs.

### BRIEF SUMMARY

The invention is defined in the claims to which reference is now directed.

An exemplary embodiment of a method of communicating promotional information to a mobile device is presented herein.

The method comprises receiving, at the media content receiver, a media content stream, or streams, comprising program content and an advertising commercial associated with an advertised item. The method determines that a user of a media content receiver is likely to be interested in an advertised item and, in response to the determination, obtains promotional information related to the advertised item. The method continues by generating a message that includes the promotional information, and by communicating the message from the media content receiver in a manner intended for wireless receipt by the mobile device.

According to the method, determining that a user of a media content receiver is likely to be interested in the advertised item may include detecting a user initiated action indicative of interest in the advertised item. The user initiated action may be received during a period in which the media content receiver outputs the advertising commercial for display. The user initiated action comprises recording the advertising commercial separately from the program content. The advertising commercial is associated with the advertised item by metadata contained within the media content stream, the metadata including the location of promotional information related to the advertised item to be obtained. The method further comprises the step of analyzing the metadata to identify the location of the promotional information.

The method may further comprise operating the media content receiver to present a media content stream to the user, wherein the advertised item is a subject of the media content stream, the media content stream comprising an advertising commercial. The determining step may include determining that the user has recorded the commercial, or determining that the user has viewed the commercial multiple times.

The promotional information may comprise a coupon for the advertised item, or a uniform resource locator (URL) for a website associated with the advertised item for example.

The generating step may generate the message as an email, the communication step further including sending the email to the user's mobile device. Alternatively, the generating step may generate the message as a text message, and the communicating step sends the text message to the user's mobile device.

Recording separately means that the advertising commercial has been specifically recorded in isolation, or substantially in isolation, rather than recorded as part of a recording of program material within which the advertising commercial appears.

The determining step may determine that the user has recorded the commercial by detecting a user initiated instruction that causes the media content receiver to record the commercial content separately from the program content, the user instruction being received during or prior to the output of the commercial.

The determining step may further include determining that the media content receiver has output the commercial at least a predetermined number of times. Determining that the media content receiver has output the commercial may then comprise determining when the media content receiver receives a user initiated instruction to output a stored commercial.

Communicating the message from the media content receiver in a manner suitable for wireless receipt by the mobile device may comprise transmitting the message wirelessly using a local short range data communication protocol. The message may be communicated directly from the media content receiver to the mobile device.

The promotional material may be contained within the same media content stream as the advertising commercial. The promotional material may be contained within the advertising commercial data itself, or it may be contained within a separate data stream that is linked to the advertising commercial content by metadata contained in the media content stream.

### Removed

The determination step may further be based on detecting when the media content receiver records additional different advertising commercials related to the advertised item separately from the program content.

The determining step may further comprise determining when a user of the media content receiver records additional different advertising commercials separately from the program content, the recorded advertising commercials each having one or more common fields of metadata associated therewith. The determining step then includes determining that the recorded advertising commercials are linked by one or more common characteristics, the common characteristics being determined by comparing the common fields of metadata for each recorded advertising commercial. The promotional information related to the advertised item to be obtained is then determined based on the matching metadata fields for the recorded advertising commercials.

The promotional information may be a notification indicating that an electronic coupon is available for downloading to the mobile device, the notification including a link to the electronic coupon and the method further comprising the step of downloading the electronic coupon from the media content receiver to the mobile device.

Also provided is an exemplary embodiment of a media content receiver.

According to a first aspect, the receiver includes: a content input interface to receive media content streams from a media content source, the media content streams comprising a program content and a commercial for an advertised item; a data storage element to store promotional information related to the advertised item; a content output interface to provide the media content for presentation to a user; a wireless communication module coupled to the data storage element; and control circuitry coupled to the content input interface, the data storage element, the content output interface, and the wireless communication module. The control circuitry is configured to determine that the user is likely to be interested in the advertised item and, in response thereto, generate a message for delivery to a mobile device. The message includes the promotional information, and the wireless communication module is configured to wirelessly transmit the message in a manner intended for receipt by the mobile device.

The media content receiver further comprises a data storage element for storing program content and advertising commercials from the media content streams, which may be the same data storage element as that used for storing promotional information related to the advertised item. The control circuitry is configured to determine that the user is likely to be interested in the advertised item by detecting a user initiated action during a period in which the media content receiver outputs the advertising commercial for display; and, in response thereto, generate a message for delivery to a mobile device, wherein the message includes the promotional information. The wireless communication module is configured to wirelessly transmit the message in a manner suitable for receipt by the mobile device. The control circuitry determines that the user is likely to be interested in the advertised item when the commercial has been recorded. The advertising commercial is associated with the advertised item by metadata contained within the media content stream, the metadata including the location of promotional information related to the advertised item to be obtained, the control circuitry being further configured to analyze the metadata to identify the location of the promotional information.

The wireless communication module may be configured to wirelessly transmit the message directly to the mobile device using a short range wireless data communication protocol.

### Removed

An exemplary embodiment of a method of operating a media content receiver to deliver electronic coupons to a mobile device is also provided. The method involves: receiving media content from a media content source, the media content comprising program content and commercial content including a commercial; detecting a command to record the commercial separately from the program content; in response to detecting the command, obtaining an electronic coupon for something referenced in the commercial; and wirelessly transmitting a notification from the media content receiver to a mobile device, the notification indicating that the electronic coupon is available for downloading to the mobile device. The method may further comprise the step of downloading the electronic coupon from the media content receiver to the mobile device.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic representation of an embodiment of a video services broadcasting system;
FIG. 2 is a schematic representation of an embodiment of a media content receiver, which is suitable for use in the video services broadcasting system shown in FIG. 1;
FIG. 3 is a flow chart that illustrates an exemplary embodiment of a method of communicating promotional information to a mobile device; and
FIG. 4 is a flow chart that illustrates an exemplary embodiment of a method of operating a media content receiver.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. Moreover, it should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The techniques and technology described herein can be employed in the context of a video delivery system such as a cable television system, a satellite television system, a computer-based content delivery system, or the like. The disclosed subject matter relates to certain features and functions of a media content or video services receiver (such as a set-top box). In particular, the media content receiver is suitably configured to determine when a user has expressed some level of interest in an advertisement, an infomercial, or other form of commercial content that is a departure from the normally scheduled or requested program content. In response to such a determination (e.g., a determination that the user is likely to be interested in an advertised item), the media content receiver initiates the delivery of a message or notification to a mobile device. The mobile device is typically and usually (but not always) owned, operated, or possessed by the user-viewer of the commercial content. The message or notification may include promotional information, marketing material, additional information about the advertised item, a coupon, the URL of a website associated with the advertised item, a Quick Response (QR) code, or the like. Alternatively or additionally, the message or notification may indicate an online resource or other source where such additional information is available to the user-viewer. In certain exemplary embodiments, the media content receiver wirelessly transmits the message or notification directly to the mobile device using a local short range wireless data communication protocol, e.g., the BLUETOOTH wireless protocol, the IEEE 802.11 wireless protocol, or the like.

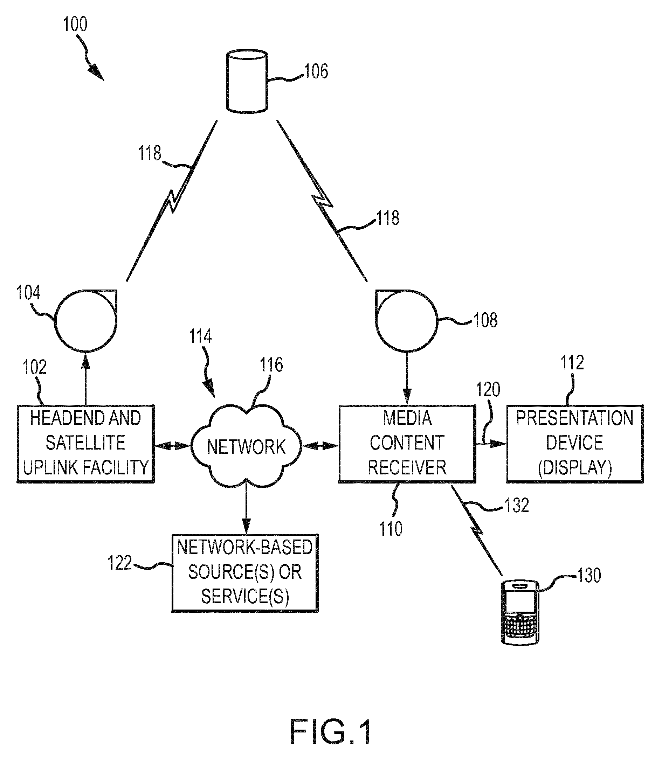

Turning now to the drawings, FIG. 1 is a schematic representation of an embodiment of a video services broadcasting system 100 that is suitably configured to support the techniques and methodologies described below. The system 100 (which has been simplified for purposes of illustration) generally includes, without limitation: a data center 102; an uplink transmit antenna 104; a satellite 106; a downlink receive antenna 108; a media content receiver 110 or other customer equipment; and a presentation device 112 (such as a display, a monitor, a television, audio equipment, or the like). In certain embodiments, the data center 102 communicates with the media content receiver 110 via a back-channel connection 114, which may be established through one or more data communication networks 116. For the sake of brevity, conventional techniques related to satellite communication systems, satellite broadcasting systems, DVB systems, data transmission, signaling, network control, and other functional aspects of the systems (and the individual operating components of the systems) may not be described in detail herein.

The data center 102 may be deployed as a headend facility and/or a satellite uplink facility for the system 100. The data center 102 generally functions to control content and data sent over a high-bandwidth link 118 to any number of downlink receive components (only one downlink receive antenna 108, corresponding to one customer, is shown in FIG. 1). In the embodiment shown in FIG. 1, the high-bandwidth link 118 is a direct broadcast satellite (DBS) link that is relayed by the satellite 106, although equivalent embodiments could implement the high-bandwidth link 118 as any sort of cable, terrestrial wireless and/or other communication link as desired.

The data center 102 includes one or more conventional data processing systems or architectures that are capable of producing signals that are transmitted via the high-bandwidth link 118. In various embodiments, the data center 102 represents a satellite or other content distribution center having: a data control system for controlling content, signaling information, blackout information, and other data; and an uplink control system for transmitting content, signaling information, blackout information, and other data using the high-bandwidth link 118. These systems may be geographically, physically and/or logically arranged in any manner, with data control and uplink control being combined or separated as desired.

The uplink control system used by the system 100 is any sort of data processing and/or control system that is able to direct the transmission of data on the high-bandwidth link 118 in any manner. In the exemplary embodiment illustrated in FIG. 1, the uplink transmit antenna 104 is able to transmit data to the satellite 106, which in turn uses an appropriate transponder for repeated transmission to the downlink receive antenna 108. Under normal operating conditions, the satellite 106 transmits content, signaling data, blackout information, and other data to the downlink receive antenna 108, using the high-bandwidth link 118. In practical embodiments, the downlink receive antenna 108 represents the customer's satellite dish, which is coupled to the media content receiver 110.

The media content receiver 110 can be realized as any device, system or logic capable of receiving signals via the high-bandwidth link 118 and the downlink receive antenna 108, and capable of providing demodulated content to a customer via the presentation device 112. The presentation device 112 may be implemented as, or include, without limitation: a television set; a monitor; a computer display; or any suitable customer appliance with compatible display and/or sound capabilities. In various embodiments, the media content receiver 110 is implemented as a set-top box of the type commonly used with DBS or cable television distribution systems. In other embodiments, however, the functionality of the media content receiver 110 may be commonly housed within the presentation device 112 itself. In still other embodiments, the media content receiver 110 is a portable device that may be transportable with or without the presentation device 112. The media content receiver 110 may also be suitably configured to support broadcast television reception, video game playing, personal video recording and/or other features as desired.

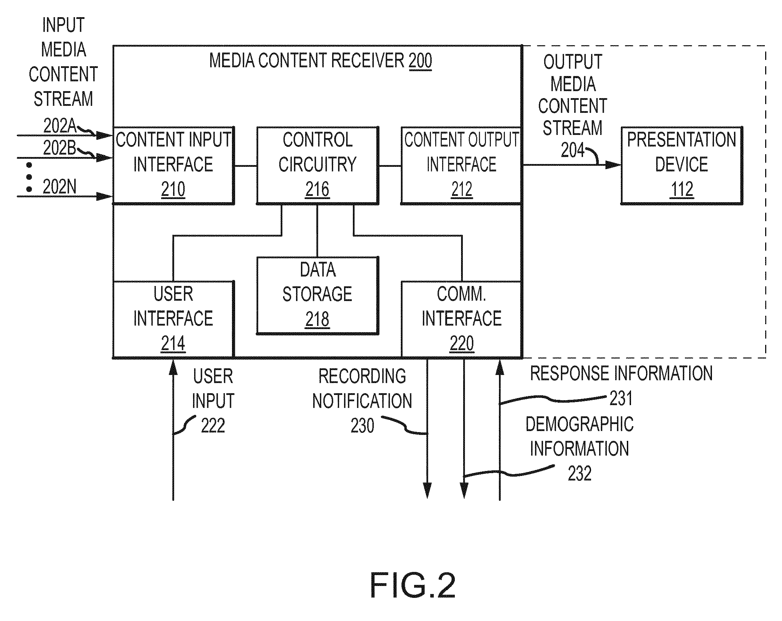

During typical operation, the media content receiver 110 receives programming (broadcast events, which may include program content and commercial/advertisement content), signaling information, and/or other data via the high-bandwidth link 118. The media content receiver 110 then demodulates, decompresses, descrambles, and/or otherwise processes the received digital data, and then converts the received data to suitably formatted video signals 120 that can be rendered for viewing by the customer on the presentation device 112. Additional features and functions of the media content receiver 110 are described below with reference to FIG. 2. For example, the media content receiver 110 can obtain, present, and/or manage user access to promotional information, marketing material, manufacturer information, product information, and/or other information that might be related to an advertised item (e.g., a product, a service, or anything offered in commerce).

Certain embodiments of the system 100 may also include or cooperate with any number of network-based content sources and/or any number of network-based services (e.g., websites, vendor-maintained servers, manufacturer-maintained servers, content delivery services, content providers, digital media vendors, or the like). In this regard, FIG. 1 depicts one block that represents these network-based sources or services 122. As explained in more detail below, these network-based sources or services 122 can provide access to promotional information, electronic coupons, QR codes, marketing materials, and/or other non-programming content via the network 116 (for example, the Internet, a cellular telecommunication network, a satellite distribution system, etc.). If the media content receiver 110 is web-enabled, then it can present web-based content from the network-based sources or services 122, as is well understood. For example, certain embodiments of the media content receiver 110 could utilize uniform resource locators (URLs) that point to content managed, provided, or otherwise accessible through the network-based sources or services 122. In this regard, the media content receiver 110 could be suitably configured to present streaming media using the presentation device 112.

The system 100 may also include or cooperate with one or more mobile devices 130. More specifically, a mobile device 130 can wirelessly communicate with a wireless communication module, receiver, or transceiver of the media content receiver 110. Such wireless communication may be carried out over a wireless link 132 between the media content receiver 110 and the mobile device 130, and in accordance with one or more wireless data communication protocols. Wireless communication between the media content receiver 110 and the mobile device 130 may be direct (i.e., point-to-point) or indirect (e.g., data can be routed via any number of intermediary or repeater devices if so desired). In practice, the wireless data communication between the media content receiver 110 and the mobile device 130 may be in accordance with a short range wireless data communication protocol such as, without limitation: the BLUETOOTH wireless protocol; IEEE Specification 802.11 (any variant); wireless USB; infrared; or magnetic coupling.

The platform and configuration of the mobile device 130 might vary from one system to another. Accordingly, depending upon the implementation of the system 100, the mobile device 130 may be, without limitation: a mobile telephone; a portable video game device; a digital media player; a digital camera or video camera; a portable computer (a laptop, a netbook, a tablet computer, etc.); a remote controller for the media content receiver 110; a portable electronic medical device; or a mobile global positioning system. As described in more detail below, the mobile device 130 is capable of receiving promotional information directly from the media content receiver 110 via the wireless link 132 and/or indirectly from the media content receiver 110 by way of the network 116, the network based sources or services 122, a cellular communication network, or the like.

FIG. 2 is a schematic representation of an exemplary embodiment of a media content receiver 200 suitable for use in a video services broadcasting system, such as the system 100 shown in FIG. 1. The media content receiver 200 may be any device configured to receive and process a media content stream, which may include program content and non-program content (i.e., commercial content, advertisements, or any interstitial content that appears between segments of program content). Examples of the media content receiver 200 include, but are not limited to, satellite, cable, and terrestrial television receivers or set-top boxes, televisions, satellite and terrestrial radio receivers, digital video recorder (DVR) units, desktop and laptop computers, and mobile communication devices, such as cellular phones, personal digital assistants (PDAs), and so on. The media content receiver 200 may include or cooperate with the presentation device 112 (see also FIG. 1), such as a visual display and/or audio-generating hardware, for presenting media content to a user.

As shown in FIG. 2, the media content receiver 200 includes a content input interface 210, a content output interface 212, a user interface 214, control circuitry 216, and at least one data storage element 218. The media content receiver 200 may also include a communication interface 220 in some implementations. Other components, such as a power supply or a "smart card" removable memory device interface, may also be included in the media content receiver 200, but are not described further herein to simplify and focus the following discussion. Other devices, such as a satellite or terrestrial antenna and associated signal conversion circuitry, may be coupled with the media content receiver 200 to receive the media content streams described below, but such devices are not discussed in detail hereinafter. The elements, components, and functional modules of the media content receiver 200 may be coupled together or otherwise interconnected as needed to support data communication, to provide supply voltages, and to otherwise support the operation and functionality of the media content receiver 200.

The content input interface 210 receives one or more media content streams 202A-202N from at least one media content source. The media content streams 202 may represent broadcast television programming streams received via separate programming channels. A given media content stream 202 may convey program content and/or commercial or advertising content, which is typically interspersed between segments of the program content. In this regard, media content received and presented by the media content receiver 200 may include one or more commercials for advertised items.

In the case of a satellite television receiver, the content input interface 210 receives the media content streams 202 via an antenna/LNB (low-noise block-converter) combination that receives, down-converts, and forwards the media content streams 202 to the content input interface 210, typically via a coaxial cable. The content input interface 210 may include one or more tuners for selecting particular programming channels carrying the incoming media content streams 202 for forwarding via the content output interface 212 to the presentation device 112, such as a television, video monitor, and/or audio amplifier with speakers. The content input interface 210 may also perform any decryption, decoding, and similar processing of the received media content streams 202 required to place the media content streams 202 in a format usable by the content output interface 212. In one example, the video may be formatted according to one of the Motion Picture Experts Group (MPEG) formats, such as MPEG-2 or MPEG-4, while the audio may be formatted according to MPEG or Dolby Digital 5.1 (also referred to as AC-3). Other audio/video content format standards may be utilized in other embodiments.

The content output interface 212 provides at least one of the media content streams 202 as an output media content stream 204 to the television or other presentation device 112 connected thereto. To that end, the content output interface 212 may encode the output media content stream 204 in accordance with one or more output formats. For example, the content output interface 212 may format the output media content stream 204 for one or more of an analog composite or component video connection with associated audio connection, a modulated radio frequency (RF) connection, and a High

Definition Multimedia Interface (HDMI) connection. Other possibilities for the content output interface 212 include, but are not limited to, Ethernet and Universal Serial Bus (USB).

To allow a user to control various functions and aspects of the media content receiver 200, including the selection of programming channels for viewing, as well as the selection of an interstitial content segment to be recorded, the user interface 214 receives user input 222 for such purposes. In many examples, the user interface 214 may be a remote control interface configured to receive the user input 222 by way of infrared (IR), radio frequency (RF), acoustic, or other wireless signal technologies. In certain embodiments, the user interface 214 may include or cooperate with a wireless data communication module to accommodate wireless data communication with mobile devices, including the mobile device 130 shown in FIG. 1. To facilitate such information entry, the media content receiver 200 may provide a menu system or other on-screen display system presented to the user via the presentation device 112. In some implementations, the user interface 214 may also include any of a keyboard, mouse, and/or other user input device.

The data storage element 218 is configured to store at least a portion of one or more of the media content streams 202, including both media content segments and included interstitial or commercial segments, for delayed playback via the content output interface 212 to the presentation device 112, as well as buffering for fast forward, rewind, pause, and other transport functionality. Thus, the data storage element 218 may operate as a DVR unit incorporated in the media content receiver 200. Other information, such as electronic program guide (EPG) information and persistent recording metadata, may also be included in the data storage element 218. The data storage element 218 may include volatile memory, such as static and/or dynamic random-access memory (RAM), and/or nonvolatile memory, such as read-only memory (ROM), flash memory, and magnetic or optical disk memory.

The data storage element 218 may also be utilized to store promotional information related to advertised items that are referenced or otherwise included in commercial content presented by the media content receiver 200. As used here, "promotional information" may include any or all of the following, without limitation: an electronic coupon; marketing material; descriptive information about an advertised item; a URL of a website for an advertised item, for the manufacturer or supplier of an advertised item, for a retailer or seller of an advertised item, (or any relevant website); contact information for an advertiser, manufacturer, vendor, or seller (or any relevant person or entity); an audio, video, or image file that includes content related to an advertised item; a sample or demo of an advertised item (assuming that the advertised item can be conveyed in an electronic format); a map or directions to a store that carries an advertised item; or a QR code.

The promotional information may be obtained by the media content receiver 200 in a number of different ways. In accordance with one practical scenario, the promotional information is conveyed with its respective commercial content in a media content stream 202. For example, if interstitial commercial content represents an advertisement for Independent Truck Company, an electronic coupon for a discounted purchase of a truck offered by Independent Truck Company would be provided with the commercial content for extraction and storage at the data storage element 218. In practice, the promotional information could be embedded in the same file as the commercial content, or it could be provided as a separate and distinct data stream that is somehow linked (e.g., using metadata) to the commercial content file. In another possible scenario, the media content receiver 200 is configured to request the promotional information by contacting a website, an online resource, a network-based server, or any remote data provider. In this regard, the media content receiver 200 need not receive and store promotional information until it determines that such promotional information is actually needed. For example, if the media content receiver 200 determines that a user has recorded or repeatedly watched a commercial for Spitfire Wheels, it can automatically contact a remote service or entity and request promotional information (e.g., a coupon or marketing literature) for Spitfire Wheels. Upon receipt of such promotional information, the media content receiver 200 stores the associated data in the data storage element 218.

In accordance with one implementation, promotional information could be delivered directly from a content server to the customer (e.g., via a satellite receiver), based on customer interest from another source (e.g., the customer has selected items of interest from a video service provider's website or has registered a product on a manufacturer's website). Notably, the source that obtains the customer input or feedback need not be specifically related to the conveyed media content. As another example, a content server could be linked to a database that connects the user of the media content receiver 200 to their previous purchases or Internet browsing. Such a feature would enable the system to recommend or suggest products, services, or content based on historical purchases or browsing habits. Likewise, the media content receiver 200 could be configured to receive and process usage data from the mobile device (and/or to access data related to use patterns or usage habits from other devices or systems on the network) to determine what promotional information to provide.

The control circuitry 216 is configured to control and/or access other components of the media content receiver 300, and is configured to perform, manage, or execute the operations, functions, processes, and methods described in more detail here. The control circuitry 216 may include one or more processors, such as a microprocessor, microcontroller, or digital signal processor (DSP), configured to execute instructions directing the processor to perform the functions discussed more fully hereinafter, such as the various functions related to the management and handling of promotional information and related to data communication with mobile devices. The control circuitry 216 may also include memory or data storage adapted to contain such instructions, or may utilize the data storage element 218 for that purpose. The memory may also include other data to aid the control circuitry 216 in performing the tasks more particularly described below. In another implementation, the control circuitry 216 may be strictly hardware-based logic, or may include a combination of hardware, firmware, and/or software elements.

In some implementations, the media content receiver 200 may include a communication interface 220 configured to transmit recording notifications 230, and possibly demographic information 232, and receive response information 231 (which may include promotional information) associated with a user-selected persistent recording of commercial content. In certain embodiments, the communication interface 220 may include or cooperate with a wireless data communication module to accommodate wireless data communication with mobile devices, including the mobile device 130 shown in FIG. 1. The communication interface 220 may employ any of a number of communication technologies for transmission and reception of information, including both wired and wireless varieties. For example, the communication interface 220 may be compatible with Ethernet, IEEE 802.11x, BLUETOOTH, or cellular technology. In some implementations, the communication interface 220 may employ a direct connection to a broadband connection for receiving and transmitting information via the Internet.

In the examples to follow, the input media content stream 202 generally includes both video data and audio data, possibly along with some text data and/or other metadata that may describe various aspects of, or provide additional information regarding, the input media content stream 202. The video data may include an ongoing series of still video images, or frames that provide a moving image when presented in sequence. Furthermore, the frames may be presented in an uncompressed format, or in a compressed format, such as one of the MPEG formats, including MPEG-2 or MPEG-4. Similarly, the audio data may include a series of audio samples for presentation to the user in sequence.

The control circuitry 216 of the media content receiver 200 is configured to present at least one of the media content streams 202 received via the content input interface 210 to the content output interface 212 for presentation to the user via the presentation device 112. The exemplary embodiment of the media content receiver 200 provides the user the ability to record an interstitial segment (e.g., a commercial or an advertisement) of a media content stream 202 that is currently being presented, or has just recently been presented, for later viewing. The media content receiver 200 may also have intelligence and processing logic to determine when a commercial or an advertisement has been repeatedly viewed (either live or from a recorded version) and, in response to such repeated viewing, to conclude that a user of the media content receiver 200 is likely to be interested in an advertised item. Notably, such a determination might be based on the recording or repeated viewing of one distinct commercial, or it could be based on the recording or repeated viewing of different commercials related to the same advertised item. Alternatively or additionally, such a determination could be based on the recording or repeated viewing of commercials related to different advertised items that have one or more common characteristics, traits, or factors. For example, if the media content receiver 200 detects that multiple car commercials have been recorded, then the media content receiver 200 could determine that the user is generally interested in cars or might be planning to purchase a new car. Consequently, the media content receiver 200 could respond by providing car-related promotional information to the user.

Certain implementations could also determine user interest in a product, service, category, genre, or subject by analyzing viewing habits of actual program content (in lieu of or in addition to the monitoring of commercial content viewing habits). For example, if the media content receiver 200 determines that a user frequently records or watches music or concert programming, then the media content receiver 200 might conclude that the user is generally interested in music. Accordingly, the media content receiver 200 may initiate the delivery of music-related promotional information to the user. As another example, assume that the media content receiver 200 detects that the user frequently watches or records programs related to cooking or food. This pattern of viewing behavior is indicative of an interest in the culinary arts and, therefore, the media content receiver 200 may obtain restaurant coupons for delivery to a mobile device of the user.

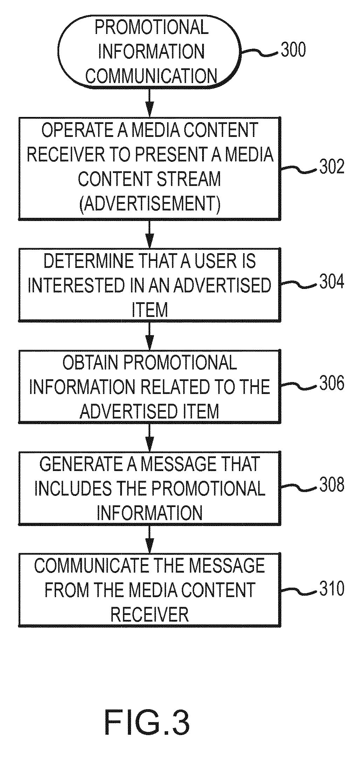

The system 100 and the media content receiver 200 can be operated in the manner described herein to deliver promotional information (and/or to provide access to promotional information) to a mobile device, which will typically be owned or operated by the user of the media content receiver 200. In this regard, FIG. 3 is a flow chart that illustrates an exemplary embodiment of a process 300 for communicating promotional information to a mobile device. The various tasks performed in connection with a process described herein be performed by software, hardware, firmware, or any combination thereof. For illustrative purposes, the description of a process may refer to elements mentioned above in connection with FIG. 1 and FIG. 2. In practice, portions of a described process may be performed by different elements of the described system, e.g., components of the media content receiver 200, a remote server or website, a content provider, or the like. It should be appreciated that a described process may include any number of additional or alternative tasks, the tasks shown in the figures need not be performed in the illustrated order, and a described process may be incorporated into a more comprehensive procedure or process having additional functionality not described in detail herein. Moreover, one or more of the tasks shown in the figures could be omitted from an embodiment of the described processes as long as the intended overall functionality remains intact.

In accordance with the process 300, a media content receiver is operated to present a media content stream to a user (task 302). The media content stream may include or represent program content, commercial content, advertising content, etc. For this example, the media content stream conveys a commercial or an advertisement, and an advertised item is a subject of the media content stream. Notably, the presentation of the media content stream may correspond to a live broadcast presentation or a presentation of recorded content. In other words, the media content stream may be a live stream or a recorded stream internally generated by the media content receiver.

The process 300 may continue by determining that the user of the media content receiver is likely to be interested in the advertised item (task 304). In certain embodiments, the media content receiver determines such user interest by monitoring or analyzing user viewing/recording habits or patterns. For example, user interest may be indicated by any of the following, without limitation: the user has recorded the commercial separately from program content; the user has viewed (replayed) a recorded commercial multiple times, or at least a threshold number of times; the user does not fast-forward through a recorded commercial while watching program content; the user enters a particular command or engages a remote control function while viewing a live commercial (e.g., a hotkey that indicates "I'm Interested" or "Send Coupon" or "More Info"); or the user explicitly expresses interest in some manner.

In response to the determination made during task 304, the process 300 may obtain or identify certain promotional information related to the advertised item (task 306). As mentioned above, the promotional information (data) may already be stored at the media content receiver. If so, then the promotional information can simply be obtained by retrieving it from internal storage. If not, then the media content receiver can obtain the promotional information from any number of remote sources, or it could be configured to monitor for and automatically record or extract promotional information from one or more future media content streams. After obtaining the promotional information, the media content receiver may generate a suitably formatted message that includes or conveys the obtained promotional information (task 308). The type and format of the message may vary depending upon the particular implementation, the current operating conditions, user or system preferences, and/or other factors or considerations. In this regard, the message may take the form of one or more of the following, without limitation: an email; a text message; an instant message; one or more data packets; an audio, video, or image file; a text or other document file; or the like.

The generated and formatted message can then be communicated from the media content receiver (task 310) using any number of data communication techniques and protocols supported by the media content receiver. Notably, the message is communicated in a manner that is intended for receipt by the mobile device (preferably via wireless data communication). Thus, task 310 may be associated with the transmission and delivery of an email, a text message, an instant message, or any type of notification to a user of the media content receiver. In certain embodiments, task 310 is associated with the wireless transmission of the message from the media content receiver directly to the mobile device using, for example, a short range wireless data communication protocol. Thus, the message could be directly sent to a user's mobile telephone or laptop computer (assuming that the receiving device is within wireless range of the media content receiver) without involving any other data communication device, third party service, or the like.

It should be appreciated that the promotional information need not always be communicated directly from the media content receiver to the mobile device. In certain scenarios, the media content receiver might request delivery or transmission of the promotional information by a remote service, a third party entity, a cellular service provider, a vehicle telematics system provider, or the like. Thus, the message could be generated by the media content receiver or by a different component, entity, device, or system. For example, the media content receiver may communicate with a server system or a website that, in turn, is responsible for transmitting the promotional information (directly or indirectly) to the mobile device. Indeed, the message that conveys the promotional information could be "relayed" using any number of systems, devices, components, or entities. For the exemplary wireless embodiment described here, however, the mobile device ultimately receives the message via a wireless link. This wireless link may be supported by the media content receiver (see FIG. 1), it may be provided by a wireless router or access point near the mobile device, it may be provided by a cellular or satellite system infrastructure device, or it may be provided by any other wireless data communication system or component.

The identity of the mobile device will be known to the media content receiver to facilitate delivery of the message to the mobile device. The media content receiver can obtain data that identifies the user and/or the mobile device in any suitable manner. For example, the mobile device could be registered with the media content receiver such that the media content receiver has knowledge of one or more of the following, without limitation: an email address assigned to the mobile device or assigned to the user; a telephone number assigned to the mobile device; an IP address of the mobile device; a network identifier of the mobile device; a device or user identifier that is unique within the content delivery system; or the like. As another example, the media content receiver may request information from the user of the mobile device before communicating the message. The requested information may include any of the identifying data listed above in the context of the registration procedure. Accordingly, the user of the mobile device could be given the opportunity to specify where to send the message and/or how best to send the message.

After the mobile device receives the promotional information, it can present the received information to the user using any of the native capabilities of the mobile device. For example, the promotional information could be displayed, played as audio or video content, saved, or the like. If the message is an email, the mobile device can present the email and any relevant attachments or content using the native email application installed on the mobile device. If the promotional information includes a URL to a website associated with the advertised item of interest, then the user can launch the website using the web browser application resident at the mobile device. If the promotional information is an electronic coupon or a universal product code (UPC), then the mobile device can display or transfer the promotional information as needed at the point of purchase. These and other situations and scenarios may be contemplated by the system described here and supported by the process 300.

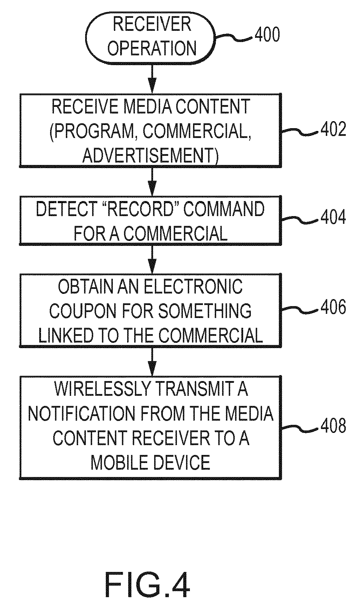

FIG. 4 is a flow chart that illustrates an exemplary embodiment of a process 400 for operating a media content receiver of the type described herein. The process 400 may be performed by the media content receiver to deliver electronic coupons and/or other promotional information to a mobile device. Although not always required, the mobile device will usually be one that is owned or operated by the user of the media content receiver. The process 400 corresponds to the operation of the media content receiver in accordance with one non-limiting and non-exhaustive scenario. Moreover, some of the tasks and functionality of the process 400 are similar or identical to counterpart tasks and functionality of the process 300, and such common aspects will not be redundantly described here.

The process 400 may be performed to receive media content from a media content source (task 402). The received media content may include or convey both program content and commercial content (where the commercial content includes at least one commercial, advertisement, infomercial, etc.). This description assumes that a user elects to record the commercial separately from the program content. Accordingly, the media content receiver may detect a "record commercial" command or instruction initiated by the user (task 404). This command may be initiated at, for example, a remote control device of the media content receiver, at the user's mobile device, at the user's computer, or the like. In response to the detection of the command, the media content receiver may obtain an electronic coupon for something referenced in the commercial, for something linked to the commercial, and/or for the subject matter of the commercial (task 406).

The electronic coupon is considered to be a form of promotional information, as described above. Thus, the electronic coupon may be already be stored at the media content receiver. Alternatively, it may be necessary for the media content receiver to download the electronic coupon from a remote source or service, as described above for the process 300. To this end, the media content receiver might need to analyze metadata included with the media content stream to be able to identify the subject matter of the commercial and/or to determine how and where to obtain the electronic coupon(s). The process 400 may continue by generating and wirelessly transmitting a notification from the media content receiver to the mobile device (task 408). For this particular example, the notification indicates that the electronic coupon is available for downloading to the mobile device. To this end, the notification might be transmitted in the form of an email, a text message, a simple "popup" message, an instant message, an audio or video clip, or the like.

The user of the mobile device can view or play the notification using the native capabilities of the mobile device. The notification may include a link, a URL, or a path that allows the mobile device to locate and access the electronic coupon. As another example, the notification may be a simple reminder to the user that a coupon is available for viewing and downloading via the media content receiver. With this option, the user can access a graphical user interface generated by the media content receiver (such as a recorded content listing, a folder or page that includes available coupons or other promotional information, or the like) to peruse coupons that might be of interest.

If the user of the mobile device decides to obtain the electronic coupon, then the content of the notification can be used to initiate downloading of the coupon from the media content receiver to the mobile device (either directly or indirectly). As mentioned above in the context of the process 300, the electronic coupon can be wirelessly downloaded to the mobile device from the media content receiver or via any number of intermediary systems, device, or components. In some embodiments, the notification may inform the user that a coupon has been automatically downloaded (i.e., pushed) to the mobile device. For that type of scenario, the user can simply operate the mobile device and navigate to a folder or a user interface where the newly downloaded coupon resides. Thereafter, the user can use or redeem the coupon in the usual manner by taking the mobile device to a store or retail establishment.

The user's mobile device may also provide different folders for user-requested content and information and for automatically (pushed) downloaded content and information. This feature may be desirable to allow the user to quickly and easily distinguish requested content and coupons from items that may be of lesser interest to the user. For example, the mobile device could maintain one folder titled "My Coupons" and another folder titled "Downloaded Promotions".

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method of communicating promotional information to a mobile device from a media content receiver, the method comprising the steps of:
receiving, at the media content receiver, a media content stream comprising program content and an advertising commercial associated with an advertised item for output to a display;
determining (304) that a user of the media content receiver is likely to be interested in the advertised item by detecting a user initiated action during a period in which the media content receiver outputs the advertising commercial for display;
in response to the determining step, obtaining (306) promotional information related to the advertised item;
generating (308) a message that includes the promotional information; and
communicating (310) the message from the media content receiver in a manner suitable for wireless receipt by the mobile device;
**characterised in that**
the user initiated action comprises recording the advertising commercial separately from the program content; and
the advertising commercial is associated with the advertised item by metadata contained within the media content stream, the metadata including the location of promotional information related to the advertised item to be obtained, the method further comprising the step of analyzing the metadata to identify the location of the promotional information.

2. The method of claim 1, wherein the determining step determines that the user has recorded the commercial by detecting a user initiated instruction that causes the media content receiver to record the commercial content separately from the program content.

3. The method of claim 1 or 2, wherein the determining step includes determining that the media content receiver has output the commercial at least a predetermined number of times, wherein determining that the media content receiver has output the commercial comprises determining when the media content receiver receives a user initiated instruction to output the stored commercial.

4. The method of any preceding claim wherein communicating the message from the media content receiver in a manner suitable for wireless receipt by the mobile device comprises transmitting the message wirelessly using a local short range data communication protocol.

5. The method of claim 4 wherein the message is communicated directly from the media content receiver to the mobile device.

6. The method of any preceding claim wherein the promotional material is contained within the same media content stream as the advertising commercial.

7. The method of claim 6 wherein the promotional material is contained within the advertising commercial data.

8. The method of claim 6 wherein the promotional material is contained within a separate data stream that is linked to the advertising commercial content by metadata contained in the media content stream.

9. The method of any preceding claim wherein the determination step is further based on detecting when the media content receiver records additional different advertising commercials related to the advertised item separately from the program content.

10. The method of any preceding claim wherein the determining step further comprises determining when a user of the media content receiver records additional different advertising commercials separately from the program content, the recorded advertising commercials each having one or more common fields of metadata associated therewith;
wherein the determining step includes determining that the recorded advertising commercials are linked by one or more common characteristics, the common characteristics being determined by comparing the common fields of metadata for each recorded advertising commercial; and
wherein the promotional information related to the advertised item to be obtained is determined based on the matching metadata fields for the recorded advertising commercials.

11. A media content receiver (200) comprising:
a content input interface (210) to receive media content streams from a media content source, the media content streams comprising a program content and an advertising commercial associated with an advertised item;
a data storage element (218) for storing program content and advertising commercials from the media content streams;
a data storage element (218) for storing promotional information related to the advertised item;
a content output interface (212) to provide the media content for presentation to a user;
a wireless communication module (220) coupled to the data storage element; and
control circuitry (216) coupled to the content input interface, the data storage element, the content output interface, and the wireless communication module; wherein:
the control circuitry being configured to determine that the user is likely to be interested in the advertised item by detecting a user initiated action during a period in which the media content receiver outputs the advertising commercial for display, and, in response thereto, generate a message for delivery to a mobile device, wherein the message includes the promotional information; and
the wireless communication module is configured to wirelessly transmit the message in a manner suitable for receipt by the mobile device;
**characterised in that**
the control circuitry is configured to determine that the user is likely to be interested in the advertised item when the commercial has been recorded;
the advertising commercial is associated with the advertised item by metadata contained within the media content stream, the metadata including the location of promotional information related to the advertised item to be obtained, the control circuitry being further configured to analyze the metadata to identify the location of the promotional information.

12. A media content receiver according to claim 11 configured to undertake the method of any of claims 1 to 10.

13. A method according to any preceding claim wherein the promotional information is a notification indicating that an electronic coupon is available for downloading to the mobile device, the notification including a link to the electronic coupon and the method further comprising the step of downloading the electronic coupon from the media content receiver to the mobile device.

## Patentansprüche

1. Verfahren zum Übermitteln von Promotionsinformationen an ein mobiles Gerät von einem Medieninhaltsempfänger, wobei das Verfahren die folgenden Schritte beinhaltet:
Empfangen, an dem Medieninhaltsempfänger, eines Medieninhaltsstroms, der Programminhalt und einen mit einem beworbenen Artikel assoziierten Werbespot zur Ausgabe an ein Display umfasst;
Feststellen (304), dass ein Benutzer des Medieninhaltsempfängers wahrscheinlich an dem beworbenen Artikel interessiert sein wird, durch Erkennen einer vom Benutzer eingeleiteten Aktion während einer Periode, in der der Medieninhaltsempfänger den Werbespot zur Anzeige ausgibt;
Einholen (306), als Reaktion auf den Feststellungsschritt, von Promotionsinformationen in Bezug auf den beworbenen Artikel;
Erzeugen (308) einer Nachricht, die die Promotionsinformationen beinhaltet; und
Übermitteln (310) der Nachricht von dem Medieninhaltsempfänger auf eine Weise, die für einen drahtlosen Empfang durch das mobile Gerät geeignet ist;
**dadurch gekennzeichnet, dass**
die vom Benutzer eingeleitete Aktion das Aufzeichnen des Werbespots separat von dem Programminhalt beinhaltet; und
der Werbespot mit dem beworbenen Artikel durch in dem Medieninhaltsstrom enthaltene Metadaten assoziiert ist, wobei die Metadaten den Ort von Promotionsinformationen mit Bezug auf den zu erwerbenden beworbenen Artikel beinhalten, wobei das Verfahren ferner den Schritt des Analysierens der Metadaten zum Identifizieren des Orts der Promotionsinformationen beinhaltet.

2. Verfahren nach Anspruch 1, wobei in dem Feststellungsschritt festgestellt wird, dass der Benutzer den Werbespot aufgezeichnet hat, durch Erkennen eines vom Benutzer eingeleiteten Befehls, der bewirkt, dass der Medieninhaltsempfänger den Werbeinhalt separat von dem Programminhalt aufzeichnet.

3. Verfahren nach Anspruch 1 oder 2, wobei der Feststellungsschritt das Feststellen beinhaltet, dass der Medieninhaltsempfänger den Werbespot wenigstens eine vorbestimmte Anzahl von Malen ausgegeben hat, wobei das Feststellen, dass der Medieninhaltsempfänger den Werbespot ausgegeben hat, das Feststellen beinhaltet, wenn der Medieninhaltsempfänger einen vom Benutzer eingeleiteten Befehl zum Ausgeben des gespeicherten Werbespots empfängt.

4. Verfahren nach einem vorherigen Anspruch, wobei das Übermitteln der Nachricht vom Medieninhaltsempfänger auf eine für den drahtlosen Empfang durch das mobile Gerät geeignete Weise das Senden der Nachricht drahtlos mit einem lokalen Kurzstreckendatenkommunikationsprotokoll beinhaltet.

5. Verfahren nach Anspruch 4, wobei die Nachricht direkt vom Medieninhaltsempfänger zu dem mobilen Gerät übermittelt wird.

6. Verfahren nach einem vorherigen Anspruch, wobei das Promotionsmaterial im selben Medieninhaltsstrom enthalten ist wie der Werbespot.

7. Verfahren nach Anspruch 6, wobei das Promotionsmaterial in den Werbespotdaten enthalten ist.

8. Verfahren nach Anspruch 6, wobei das Promotionsmaterial in einem separaten Datenstrom enthalten ist, der durch in dem Medieninhaltsstrom enthaltene Metadaten mit dem Werbespotinhalt verknüpft ist.

9. Verfahren nach einem vorherigen Anspruch, wobei der Feststellungsschritt ferner auf der Erkennung basiert, wenn der Medieninhaltsempfänger zusätzliche unterschiedliche Werbespots in Bezug auf den beworbenen Artikel separat von dem Programminhalt aufzeichnet.

10. Verfahren nach einem vorherigen Anspruch, wobei der Feststellungsschritt ferner das Feststellen beinhaltet, wenn ein Benutzer des Medieninhaltsempfängers zusätzliche unterschiedliche Werbespots separat von dem Programminhalt aufzeichnet, wobei die aufgezeichneten Werbespots jeweils ein oder mehrere geminsame Felder von damit assoziierten Metadaten haben;
wobei der Feststellungsschritt das Feststellen beinhaltet, dass die aufgezeichneten Werbespots durch eine oder mehrere gemeinsame Charakteristiken verknüpft sind, wobei die gemeinsamen Charakteristiken durch Vergleichen der gemeinsamen Felder von Metadaten für jeden aufgezeichneten Werbespot festgestellt werden; und
wobei die Promotionsinformationen in Bezug auf den zu erwerbenden beworbenen Artikel auf der Basis der übereinstimmenden Metadaten-Felder für die aufgezeichneten Werbespots festgestellt wird.

11. Medieninhaltsempfänger (200), der Folgendes umfasst:
eine Inhaltseingabeschnittstelle (210) zum Empfangen von Medieninhaltsströmen von einer Medieninhaltsquelle, wobei die Medieninhaltsströme einen Programminhalt und einen mit einem beworbenen Artikel assoziierten Werbespot beinhalten;
ein Datenspeicherelement (218) zum Speichern von Programminhalt und Werbespots von den Medieninhaltsströmen;
ein Datenspeicherelement (218) zum Speichern von Promotionsinformationen in Bezug auf den beworbenen Artikel;
eine Inhaltsausgabeschnittstelle (212) zum Bereitstellen des Medieninhalts, um ihn einem Benutzer zu präsentieren;
ein mit dem Datenspeicherinhalt gekoppeltes drahtloses Kommunikationsmodul (220); und
Steuerschaltung (216), die mit der Inhaltseingabeschnittstelle, dem Datenspeicherelement, der Inhaltsausgabeschnittstelle und dem drahtlosen Kommunikationsmodul gekoppelt ist; wobei:
die Steuerschaltung zum Feststellen konfiguriert ist, dass der Benutzer wahrscheinlich an dem beworbenen Artikel interessiert sein wird, durch Erkennen einer vom Benutzer eingeleiteten Aktion während einer Periode, in der der Medieninhaltsempfänger den Werbespot zur Anzeige ausgibt, und als Reaktion darauf eine Nachricht zur Lieferung an ein mobiles Gerät erzeugt, wobei die Nachricht die Promotionsinformationen beinhaltet; und
das drahtlose Kommunikationsmodul zum drahtlosen Übertragen der Nachricht auf eine für den Empfang durch das mobile Gerät geeignete Weise konfiguriert ist;
**dadurch gekennzeichnet, dass**
die Steuerschaltung zum Feststellen konfiguriert ist, dass der Benutzer wahrscheinlich an dem beworbenen Artikel interessiert sein wird, wenn der Werbespot aufgezeichnet wurde;
der Werbespot mit dem beworbenen Artikel durch in dem Mediendatenstrom enthaltene Metadaten assoziiert ist, wobei die Metadaten den Ort von Promotionsinformationen in Bezug auf den zu erwerbenden beworbenen Artikel beinhalten, wobei die Steuerschaltung ferner zum Analysieren der Metadaten konfiguriert ist, um den Ort der Promotionsinformationen zu identifizieren.

12. Medieninhaltsempfänger nach Anspruch 11, konfiguriert zum Durchführen des Verfahrens nach einem der Ansprüche 1 bis 10.

13. Verfahren nach einem vorherigen Anspruch, wobei die Promotionsinformationen eine Benachrichtigung sind, die anzeigt, dass ein elektronischer Coupon zum Herunterladen auf das mobile Gerät verfügbar ist, wobei die Nachricht einen Link zu dem elektronischen Coupon beinhaltet und das Verfahren ferner den Schritt des Herunterladens des elektronischen Coupons von dem Medieninhaltsempfänger auf das mobile Gerät beinhaltet.

## Revendications

1. Procédé destiné à la communication d'informations promotionnelles à un dispositif mobile d'un récepteur de contenu média, le procédé comprenant les étapes consistant à :
recevoir, au récepteur de contenu média, un flux de contenu média comprenant un contenu de programme et une annonce publicitaire associée à un article en publicité à sortir à un affichage ;
déterminer (304) qu'un utilisateur du récepteur de contenu média est susceptible d'être intéressé par l'article en publicité en détectant une action lancée par un utilisateur pendant une période durant laquelle le récepteur de contenu média sort l'annonce publicitaire pour affichage ;
en réponse à l'étape de détermination, obtenir (306) des informations promotionnelles associées à l'article en publicité ;
générer (308) un message qui comprend les informations promotionnelles ; et
communiquer (310) le message du récepteur de contenu média d'une manière qui convient à la réception sans fil par un dispositif mobile ;
**caractérisé en ce que**
l'action lancée par un utilisateur comprend enregistrer l'annonce publicitaire séparément du contenu de programme ; et
l'annonce publicitaire est associée à l'article en publicité par des métadonnées contenues dans le flux de contenu média, les métadonnées comprenant l'emplacement d'informations promotionnelles associées à l'article en publicité à obtenir, le procédé comprenant en outre l'étape consistant à analyser les métadonnées pour identifier l'emplacement des informations promotionnelles.

2. Procédé selon la revendication 1, dans lequel l'étape de détermination détermine que l'utilisateur a enregistré l'annonce en détectant une instruction lancée par l'utilisateur qui fait que le récepteur de contenu média enregistre le contenu de l'annonce séparément du contenu de programme.

3. Procédé selon la revendication 1 ou 2, dans lequel l'étape de détermination comprend déterminer que le récepteur de contenu média a sorti l'annonce au moins un nombre de fois prédéterminé, où la détermination que le récepteur de contenu média a sorti l'annonce comprend déterminer quand le récepteur de contenu média reçoit une instruction lancée par un utilisateur de sortir l'annonce stockée.

4. Procédé selon l'une quelconque des revendications précédentes, dans lequel communiquer le message du récepteur de contenu média d'une manière qui convient à la réception sans fil par le dispositif mobile, comprend transmettre sans fil le message en utilisant un protocole de communication locale de données à courte portée.

5. Procédé selon la revendication 4, dans lequel le message est communiqué directement du récepteur de contenu média au dispositif mobile.

6. Procédé selon l'une quelconque des revendications précédentes, dans lequel le matériel promotionnel est contenu dans le même flux de contenu média que l'annonce publicitaire.

7. Procédé selon la revendication 6, dans lequel le matériel promotionnel est contenu dans les données de l'annonce publicitaire.

8. Procédé selon la revendication 6, dans lequel le matériel promotionnel est contenu dans un flux de données séparé qui est relié au contenu d'annonce publicitaire par des métadonnées contenues dans le flux de contenu média.

9. Procédé selon l'une quelconque des revendications précédentes, dans lequel l'étape de détermination est basée en outre sur le fait de détecter quand le récepteur de contenu média enregistre des annonces publicitaires supplémentaires différentes associées à l'article en publicité séparément du contenu de programme.

10. Procédé selon l'une quelconque des revendications précédentes, dans lequel l'étape de détermination comprend en outre déterminer quand un utilisateur du récepteur de contenu média enregistre des annonces publicitaires supplémentaires différentes séparément du contenu de programme, les annonces publicitaires enregistrées ayant chacune un ou plusieurs champs communs de métadonnées associées à celles-ci ;
dans lequel l'étape de détermination comprend déterminer que les annonces publicitaires enregistrées sont reliées par une ou plusieurs caractéristiques communes, les caractéristiques communes étant déterminées en comparant les champs communs de métadonnées pour chaque annonce publicitaire enregistrée ; et
dans lequel les informations promotionnelles associées à l'article en publicité à obtenir sont déterminées sur la base de champs de métadonnées correspondants pour les annonces publicitaires enregistrées.

11. Récepteur de contenu média (200) comprenant :
une interface d'entrée de contenu (210) pour recevoir des flux de contenu média d'une source de contenu média, les flux de contenu média comprenant un contenu de programme et une annonce publicitaire associée à un article en publicité ;
un élément de stockage de données (218) pour stocker un contenu de programme et des annonces publicitaires de flux de contenu média ;
un élément de stockage de données (218) pour stocker des informations promotionnelles associées à l'article en publicité ;
une interface de sortie de contenu (212) pour fournir le contenu média pour présentation à un utilisateur ;
un module de communication sans fil (220) couplé à l'élément de stockage de données ; et
des circuits de commande (216) couplés à l'interface d'entrée de contenu, à l'élément de stockage de données, à l'interface de sortie de contenu et au module de communication sans fil ; dans lequel :
les circuits de commande étant configurés pour déterminer que l'utilisateur est susceptible d'être intéressé par l'article en publicité en détectant une action lancée par l'utilisateur pendant une période durant laquelle le récepteur de contenu média sort l'annonce publicitaire pour affichage, et, en réponse à ceci, générer un message à délivrer à un dispositif mobile, où le message comprend les informations promotionnelles ; et
le module de communication sans fil est configuré pour transmettre le message par voie sans fil d'une manière qui convient à la réception par le dispositif mobile ;
**caractérisé en ce que**
les circuits de commande sont configurés pour déterminer que l'utilisateur est susceptible d'être intéressé par l'article en publicité lorsque l'annonce a été enregistrée ;
l'annonce publicitaire est associée à l'article en publicité par des métadonnées contenues dans le flux de contenu média, les métadonnées comprenant l'emplacement d'informations promotionnelles associées à l'article en publicité à obtenir, les circuits de commande étant configurés en outre pour analyser les métadonnées afin d'identifier l'emplacement des informations promotionnelles.

12. Récepteur de contenu média selon la revendication 11, configuré pour entreprendre le procédé selon l'une quelconque des revendications 1 à 10.

13. Procédé selon l'une quelconque des revendications précédentes, dans lequel les informations promotionnelles sont une notification indiquant qu'un bon électronique est disponible pour téléchargement au dispositif mobile, la notification incluant un lien au bon électronique et le procédé comprenant en outre l'étape consistant à télécharger le bon électronique du récepteur de contenu média au dispositif mobile.
